# EUROPÄISCHE PATENTSCHRIFT

(11) **EP 2 683 957 B1**
(45) Veröffentlichungstag und Bekanntmachung des Hinweises auf die Patenterteilung: **02.05.2018**
(21) Anmeldenummer: 12712730.6
(22) Anmeldetag: 05.03.2012
(51) Int. Cl.: F16C 9/02, F16C 9/04

(54) **KURBELTRIEB**
CRANK DRIVE
COMMANDE À MANIVELLE

(30) Priorität: 07.03.2011 DE 102011013264
(43) Veröffentlichungstag der Anmeldung: 15.01.2014
(73) Patentinhaber: ThyssenKrupp Metalúrgica Campo Limpo Ltda., 13231-0900 Campo Limpo Paulista-SP (BR)
(72) Erfinder: RODRIGUES, Alex de Souza, CEP-13240-000 Jarinú-SP (BR); GALLI, Luis Antonio Fonseca, CEP-13106-006 Campinas, SP (BR); OLIVEIRA, Walter, Tavares, CEP-13240-000 Jarinu-SP (BR); GUERREIRO, Sergio, Stefano, CEP-18046-162 Sorocaba-SP (BR)
(74) Vertreter: thyssenkrupp Intellectual Property GmbH
(86) Internationale Anmeldenummer: PCT/IB2012/000423
(87) Internationale Veröffentlichungsnummer: WO 2012/120362

(56) Entgegenhaltungen:
- DE-B- 1 261 704
- US-A- 1 124 282
- US-A- 1 716 062

## Beschreibung

Die Erfindung betrifft einen Kurbeltrieb mit einem eine konkav geformte Oberfläche aufweisenden Kurbelwellenzapfen, einem Lagerelement, in welchem der Kurbelwellenzapfen drehbar gelagert ist, und einer zwischen dem Kurbelwellenzapfen und dem Lagerelement angeordneten Lagerschale, die eine konvex geformte erste Oberfläche aufweist, welche der konkav geformten Oberfläche des Kurbelwellenzapfens zugeordnet ist.

Der Kurbelwellenzapfen kann dabei ein Kurbelzapfen einer Kurbelwelle sein, auf dem das große Pleuelauge einer Pleuelstange gelagert ist. In diesem Fall bildet die Pleuelstange beziehungsweise deren großes Pleuelauge das Lagerelement im Sinne der vorliegenden Erfindung. Der Kurbelwellenzapfen kann aber auch ein Hauptlagerzapfen der Kurbelwelle sein, über den die Kurbelwelle drehbar in einer Lageraufnahme des Motorgehäuses gelagert ist. In diesem Fall bildet die Lageraufnahme des Motorgehäuses das Lagerelement im Sinne der vorliegenden Erfindung.

Bei vielen aus dem Stand der Technik bekannten Kurbeltrieben ist der Kurbelwellenzapfen zylindrisch ausgebildet, und zwischen dem Kurbelwellenzapfen und dem Lagerelement ist eine hohlzylindrische Lagerschale angeordnet, die über ihre Breite gesehen eine konstante Wanddicke aufweist. Diese hohlzylindrische Lagerschale weist somit über ihre axiale Erstreckung gesehen einen konstanten kreisringförmigen Querschnitt auf.

Ein Kurbeltrieb bestehend aus einem nichtzylindrischen, konkav geformten Kurbelzapfen einer Kurbelwelle und einer darauf mit ihrem großen Pleuelauge drehbar gelagerten Pleuelstange ist aus der internationalen Patentanmeldung WO 2008/129395 A2 bekannt. Bei diesem bekannten Kurbeltrieb weist der Kurbelzapfen eine konkav geformte Oberfläche auf, und die dem Kurbelzapfen zugewandte Oberfläche des großen Pleuelauges ist entsprechend konvex ausgebildet, so dass die beiden einander zugewandten Oberflächen aneinander angepasst sind. Nach einer bevorzugten Ausführungsform der in der WO 2008/129395 A2 offenbarten Erfindung ist das große Pleuelauge unmittelbar, d.h. ohne Zwischenschaltung einer Lagerschale, auf dem Kurbelzapfen gelagert. Ferner ist im allgemeinen Beschreibungsteil der WO 2008/129395 A2 eine Ausführungsform erwähnt, bei der zwischen dem Kurbelzapfen und dem großen Pleuelauge eine Lagerschale (bearing shell) angeordnet ist. Auch bei dieser Ausführungsform mit Lagerschale ist die dem Kurbelzapfen zugewandte Oberfläche des großen Pleuelauges an die konkave Form der Kurbelzapfenoberfläche angepasst.

Die WO 2008/129395 A2 gibt dem Fachmann somit die technische Lehre, dass die konvexe Krümmung der Oberfläche des großen Pleuelauges genau so verlaufen muss wie die konkave Krümmung des Kurbelzapfens. Es ist daher erforderlich, der inneren Lagerfläche des großen Pleuelauges, die mit dem Kurbelzapfen zusammen wirkt, durch spanende Bearbeitung eine konvexe Form zu geben, die der konkaven Form des Kurbelzapfens entspricht. Dabei sind auch erhebliche messtechnische Anforderungen zu erfüllen, um die exakte, für die Gleitlagerung des Pleuels auf dem Kurbelzapfen erforderliche Formgenauigkeit zu erreichen. Das Erzeugen einer solchen konvexen Form an dem großen Pleuelauge mit der für die Lagerung der Pleuelstange auf dem Kurbelzapfen erforderlichen Genauigkeit und unter Einhaltung der erforderlichen Toleranzen ist somit fertigungstechnisch aufwendig. Die Herstellungskosten für solche Pleuelstangen sind daher vergleichsweise hoch, so dass auch die Herstellungskosten für mit solchen Pleuelstangen ausgestattete Kurbeltriebe hoch sind.

Ein weiterer Nachteil der aus der WO 2008/129395 A2 bekannten Lösung ist darin zu sehen, dass aufgrund der Anpassung der Lagerfläche des großen Pleuelauges an die konkave Form der Oberfläche des Kurbelzapfens zu einer Kurbelwelle mit gegebener konkaver Kurbelzapfenoberfläche immer nur eine einzige konkrete Pleuelstange passt. Daher ist nur eine einzige Kurbeltrieb-Ausgestaltung möglich. Es ist bei dieser bekannten Lösung nicht möglich, mit einer bestimmten vorgegebenen Kurbelwelle unterschiedliche Pleuelstangen zu kombinieren, und auf diese Weise dem Konstrukteur eine größere Flexibilität bei der Ausgestaltung des Kurbeltriebs zu ermöglichen.

Die DE-AS 1 261 704 beschreibt eine Kurbelwellen- und Pleuelstangenausbildung, bei der zwischen dem Pleuelfuß und dem Kurbelwellenzapfen eine als Teilfläche eines Torus ausgebildete Lagerfläche vorgesehen ist. Gegenüber einer Lösung mit zylindrischer Lagerfläche zwischen Pleuelfuß und Kurbelwellenzapfen könnten dabei Anlaufbunde und winklige Absätze eingespart und die Kerbwirkung solcher Anlaufbunde und winkliger Absätze vermieden oder zumindest erheblich gemindert werden. Dadurch könne die Lebensdauer der Kurbelwelle erhöht und die Fertigung verbilligt werden.

Der Erfindung liegt die Aufgabe zu Grunde, einen Kurbeltrieb mit den Merkmalen des Oberbegriffs des Patentanspruchs 1 zur Verfügung zu stellen, der fertigungstechnisch einfach und vergleichsweise kostengünstig herstellbar ist. Dabei soll die Möglichkeit bestehen, auf einfache Weise auf der Basis eines bestimmten, vorgegebenen Kurbelwellendesigns konstruktiv unterschiedlich gestaltete Kurbeltriebe bereit zu stellen.

Diese Aufgabe wird gelöst durch einen Kurbeltrieb mit den Merkmalen des Patentanspruchs 1. Vorteilhafte Weiterbildungen sind in den Unteransprüchen angegeben.

Die Erfindung geht aus von einem Kurbeltrieb mit einem eine konkav geformte Oberfläche aufweisenden Kurbelwellenzapfen, einem Lagerelement, in welchem der Kurbelwellenzapfen drehbar gelagert ist, und einer zwischen dem Kurbelwellenzapfen und dem Lagerelement angeordneten Lagerschale, die eine konvex geformte erste Oberfläche aufweist, welche der konkav geformten Oberfläche des Kurbelwellenzapfens zugeordnet ist. Um zu erreichen, dass mit ein und derselben Kurbelwelle unterschiedliche Lagerelemente zu unterschiedlich ausgestalteten Kurbeltrieben kombiniert werden können, wird erfindungsgemäß vorgeschlagen, dass die Lagerschale eine zweite, dem Lagerelement zugeordnete Oberfläche aufweist, die derart ausgebildet ist, dass die Lagerschale in Längsrichtung des Kurbelwellenzapfens gesehen einen nicht konstanten Querschnitt aufweist, und dass die der Lagerschale zugewandte Oberfläche des Lagerelements hinsichtlich ihrer Form an die zweite Oberfläche der Lagerschale angepasst ist, und wobei insbesondere die zweite Oberfläche der Lagerschale konkav ist und dabei eine geringere Krümmung aufweist als die konkav geformte Oberfläche des Kurbelwellenzapfens. Auf diese Weise ist es nicht mehr erforderlich, die dem Kurbelwellenzapfen zugewandte Oberfläche des Lagerelements hinsichtlich ihrer Form an die konkav geformte Oberfläche des Kurbelwellenzapfens anzupassen. Durch den einfachen Austausch einer ersten Lagerschale mit einer konkreten, dem Lagerelement zugewandten Oberfläche gegen eine zweite Lagerschale mit einer anders ausgestalteten, dem Lagerelement zugewandten Oberfläche, können auf einfache und kostengünstige Weise für ein und dieselbe Kurbelwelle unterschiedlich ausgestaltete Lagerelemente zur Erzeugung unterschiedlicher Kurbeltriebe verwendet werden.
Dadurch, dass die zweite, dem Lagerelement zugeordnete Oberfläche der Lagerschale derart ausgebildet ist, dass der Lagerschalenquerschnitt in Längsrichtung des Kurbelwellenzapfens gesehen, d.h. also über die Lagerschalenbreite gesehen, einen nicht konstanten Querschnitt aufweist, weist die dem Kurbelwellenzapfen abgewandte und dem Lagerelement zugeordnete Oberfläche der Lagerschale eine Form auf, deren Krümmung wesentlich geringer ist als die Krümmung der dem Kurbelwellenzapfen zugeordneten Oberfläche der Lagerschale. Dadurch wird erreicht, dass die der Lagerschale zugeordnete Lagerfläche des Lagerelements eine weniger stark ausgeprägte konvexe Form mit einer Krümmung aufweisen kann, die wesentlich geringer ist als sie sein müsste, wenn diese Lagerfläche des Lagerelements hinsichtlich ihrer Form an die konkave Oberfläche des Kurbelwellenzapfens angepasst werden müsste.
Die Erfindung gewährt dem Konstrukteur somit die Freiheit, die Form der dem Kurbelwellenzapfen zugewandten Oberfläche des Lagerelements völlig unabhängig von der Form der Oberfläche des Kurbelwellenzapfens zu gestalten. Daher kann das Lagerelement fertigungstechnisch mit wesentlich weniger Aufwand hergestellt werden. Aufwendige Messungen mit teuren Messinstrumenten zur Einhaltung der erforderlichen Form der Lagerfläche des Lagerelements entfallen komplett oder können mit erheblich geringerem Aufwand und einfacheren Messinstrumenten durchgeführt werden. Die Herstellungskosten für das Lagerelement des erfindungsgemäßen Kurbeltriebs können dadurch im Vergleich zu der aus der WO 2008/129395 A2 bekannten Lösung deutlich gesenkt werden.

Nach einer ersten, nicht vom unabhängigen Patentanspruch beanspruchten Ausführungsform ist die zweite Oberfläche der Lagerschale zylindrisch ausgebildet. Sowohl die Lagerschale als auch das Lagerelement können in diesem Fall kostengünstig und fertigungstechnisch besonders einfach hergestellt werden. Bei dieser Ausführungsform kann die die Lagerschale aufnehmende Ausnehmung des Lagerelements als einfache zylindrische Ausnehmung ausgebildet sein, beispielsweise als einfache zylindrische Bohrung. Ist das Lagerelement z.B. eine Pleuelstange mit einem großen Pleuelauge, dann genügt eine einfache zylindrische Bohrung, um die Lagerschale aufnehmen und den Kurbelwellenzapfen mit der konkaven Oberfläche drehbar zu lagern. Es müssen keine strengen Form- und Toleranzvorgaben bei der Fertigung beachtet werden, wie es erforderlich wäre, wenn die dem Kurbelwellenzapfen zugewandte Oberfläche des großen Pleuelauges an die konkave Form des Kurbelwellenzapfens angepasst werden müsste. Eine einfache, grobe spanende Behandlung der inneren Oberfläche der zylindrischen Bohrung des Lagerelements reicht aus. Die Anpassung der dem Kurbelwellenzapfen zugewandten ersten, konvex geformten Oberfläche der Lagerschale an die konkav geformte Oberfläche des Kurbelwellenzapfens ist fertigungstechnisch wesentlich einfacher und kostengünstiger als die Anpassung der dem Kurbelwellenzapfen zugewandten Oberfläche des Lagerelements. Das komplexe Bauteil "Lagerelement" kann so einfach und gut herstellbar gestaltet werden, ohne dass dabei auf die Vorteile einer konkav / konvex geformten Lagerflächenpaarung am Kurbelwellenzapfen verzichtet werden muss. Die Lagerschale ist wesentlich kleiner als das Lagerelement, so dass sie einfacher zu verarbeiten oder zu bearbeiten ist. Außerdem ist die Lagerschale achsensymmetrisch ausgebildet und besitzt eine wesentlich gleichmäßigere Massenverteilung als z.B. ein als Pleuelstange ausgebildetes Lagerelement. Die konvexe erste Oberfläche der Lagerschale muss nicht durch eine spanende Bearbeitung hergestellt werden, wie dies bei dem komplexeren Lagerelement der Fall wäre, sondern kann auch durch unterschiedliche andere Herstellungsverfahren wie z.B. Pressen, Gießen, Sintern oder Schmieden hergestellt werden.

Nach einer zweiten, von dem unabhängigen Patentanspruch beanspruchten Ausführungsform der Erfindung ist die zweite Oberfläche der Lagerschale konkav ausgebildet, wobei die Krümmung dieser zweiten Oberfläche der Lagerschale geringer ausgebildet ist als die Krümmung der konkav geformten Oberfläche des Kurbelwellenzapfens. Auf diese Weise wird erreicht, dass die dem Kurbelwellenzapfen zugewandte Oberfläche des Lagerelements zumindest nicht so stark gekrümmt ausgebildet werden muss wie dies erforderlich wäre, wenn die dem Kurbelwellenzapfen zugewandte Oberfläche des Lagerelements an die konkav gekrümmte Oberfläche des Kurbelwellenzapfens angepasst werden müsste. Auch bei dieser Ausführungsform der Erfindung bleibt der Vorteil erhalten, dass das Lagerelement kostengünstig und mit einem vergleichsweise geringen Fertigungsaufwand herstellbar ist.

Beiden vorstehend beschriebenen Ausführungsformen ist gemeinsam, dass der Fertigungsaufwand für das eigentliche Lagerelement, also die Pleuelstange mit dem großen Pleuelauge oder das den Hauptlagerzapfen einer Kurbelwelle aufnehmende Lagerelement des Motorgehäuses, mit wesentlich geringerem fertigungstechnischen und messtechnischen Aufwand hergestellt werden kann, wodurch die Herstellkosten deutlich reduziert werden. Es ist fertigungstechnisch wesentlich weniger aufwendig und daher auch kostengünstiger, lediglich die Lagerschale mit ihrer ersten, dem Kurbelwellenzapfen zugewandten Oberfläche an die konkave Form des Kurbelwellenzapfens anzupassen, als die dem Kurbelwellenzapfen zugewandte Lagerfläche des Lagerelementes selbst an die konkave Form des Kurbelwellenzapfens anzupassen. Der die Herstellungskosten und den Fertigungsaufwand erhöhende Arbeitsschritt, der die Anpassung der Form der Lagerfläche des Lagerelements an die konkav geformte Oberfläche des Kurbelwellenzapfens beinhaltet, wird erfindungsgemäß somit vom Lagerelement weg in die Lagerschale hinein verlagert. Die Vorteile einer Lagerung des Lagerelementes auf einem Kurbelwellenzapfen mit einer konkav geformten Lageroberfläche einerseits und der einfachen Ausgestaltung des Lagerelementes mit einer zylindrischen oder nur geringfügig gekrümmten konvexen Lagerfläche können durch die Erfindung miteinander verbunden und gleichzeitig ausgenutzt werden.

Im Folgenden wird die Erfindung anhand einer schematischen Zeichnung näher erläutert. Es zeigen
- Fig. 1a: eine nicht beanspruchte Ausführungsform mit einem als Pleuelstange ausgebildeten Lagerelement, wobei die Pleuelstange mit ihrem großen Pleuelauge auf einem Kurbelzapfen einer Kurbelwelle gelagert ist, in einem lediglich einen Teil des Kurbeltriebs zeigenden Ausschnitt;
- Fig. 1b: eine nicht beanspruchte Ausführungsform , bei der der Kurbelwellenzapfen als Hauptlagerzapfen einer Kurbelwelle ausgebildet ist, mit einer mit Fig. 1a vergleichbaren Lagerschale, in einem lediglich einen Teil des Kurbeltriebs zeigenden Ausschnitt;
- Fig. 2a: eine Ausführungsform der Erfindung mit einem als Pleuelstange ausgebildeten Lagerelement, das mit seinem großen Pleuelauge auf einem Kurbelzapfen einer Kurbelwelle gelagert ist, in einer gegenüber Fig. 1a abgewandelten Ausführungsform der Erfindung und ebenfalls in einem lediglich einen Teil des Kurbeltriebs zeigenden Ausschnitt;
- Fig. 2b: eine gegenüber Fig. 1b abgewandelte Ausführungsform der Erfindung mit einer auf einem Hauptlagerzapfen einer Kurbelwelle angeordneten erfindungsgemäßen Lagerschale, in einem lediglich einen Teil des Kurbeltriebs zeigenden Ausschnitt;
- Fig. 3: einen Kurbeltrieb gemäß dem Stand der Technik.

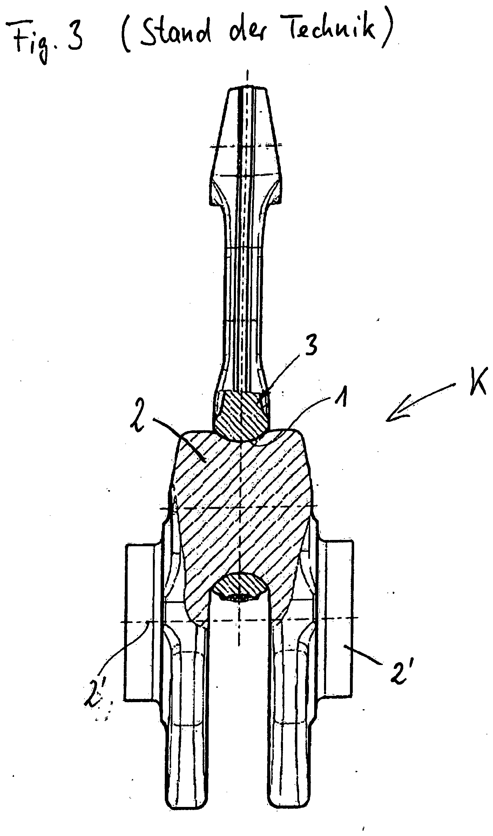

In Fig. 3 ist ein aus dem Stand der Technik gemäß WO 2008/129395 A2 bekannter Kurbeltrieb K am Beispiel eines auf einem Kurbelwellenzapfen 2 gelagerten Lagerelements 3 dargestellt. Das Lagerelement 3 ist als Pleuelstange ausgebildet. Die dem Lagerelement 3 zugewandte Lagerfläche 1 des Kurbelwellenzapfens 2 weist eine konkave Form auf. Die dieser Lagerfläche 1 zugewandte Oberfläche des Lagerelements 3 weist eine konvexe Form auf, die an die konkave Form der Lagerfläche 1 des Kurbelwellenzapfens 2 angepasst ist. In der in Fig. 3 dargestellten Ausführungsform, die gemäß WO 2008/129395 A2 die bevorzugte Ausführungsform ist, ist zwischen dem Lagerelement 3 und dem Kurbelwellenzapfen 2 keine Lagerschale angeordnet. In der Beschreibung der WO 2008/129395 A2 ist jedoch erwähnt, dass zwischen dem Lagerelement 3 und dem Kurbelwellenzapfen 2 eine Lagerschale angeordnet sein kann. Von diesem, lediglich im Beschreibungsteil der WO 2008/129395 A2 kurz erwähnten Ausführungsbeispiel geht die vorliegende Erfindung aus. Mit 2' sind die Hauptlagerzapfen des Kurbeltriebs K bezeichnet.

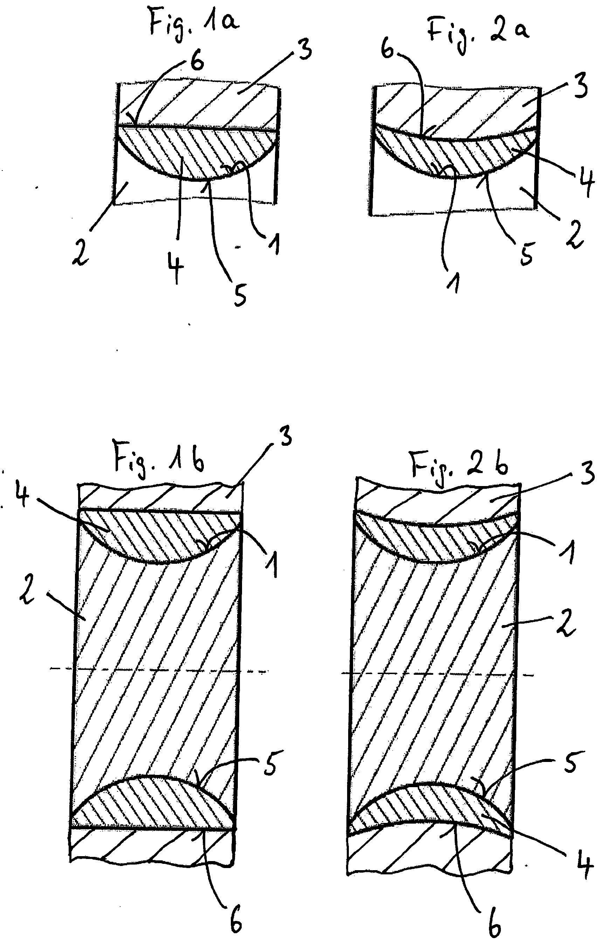

Die Figuren 1a und 1b zeigen eine erste, nicht beanspruchte Ausführungsform eines Kurbeltriebs in einer schematischen und lediglich einen Ausschnitt des Kurbeltriebs zeigenden Darstellung. Gemäß dieser ersten Ausführungsform ist die Lagerschale 4, die zwischen dem Kurbelwellenzapfen 2 und dem Lagerelement 3 angeordnet ist, mit einem über die Längserstreckung des Kurbelwellenzapfens 2 (also parallel zur Zeichnungsebene gesehen) nicht konstanten Querschnitt ausgebildet. Bei dem in Fig. 1a dargestellten Gegenstand ist der Kurbelwellenzapfen 2 als exzentrisch angeordneter Kurbelzapfen einer nicht näher dargestellten Kurbelwelle ausgebildet. Das Lagerelement 3 ist als Pleuelstange ausgebildet, die mit ihrem großen Pleuelauge auf dem Kurbelzapfen 2 gelagert ist. In ähnlicher Weise ist in Fig. 1b der als Hauptlagerzapfen an einer nicht weiter dargestellten Kurbelwelle ausgebildete Kurbelwellenzapfen 2 über eine Lagerschale 4 in einem Lagerelement 3 gelagert. Im dargestellten Ausführungsbeispiel gemäß Fig. 1b ist das Lagerelement 3 eine mit einem nicht dargestellten Motorgehäuse eines Verbrennungsmotors fest verbundene Lageraufnahme zur drehbaren Aufnahme der Hauptlagerzapfen der Kurbelwelle.

Sowohl in Fig. 1a als auch in Fig. 1b weist das Lagerelement 4 in Längsrichtung des Kurbelwellenzapfens 2 gesehen, also parallel zur Zeichnungsebene gesehen, einen nicht konstanten Querschnittsverlauf auf. Die Lagerschale 4 weist eine konvex geformte erste Oberfläche 5 auf, die der konkav geformten Oberfläche 1 des Kurbelwellenzapfens 2 zugeordnet ist. Die erste Oberfläche 5 der Lagerschale 4 ist hinsichtlich ihrer Form an die konkav geformte Oberfläche 1 des Kurbelwellenzapfens 2 angepasst. Das Lagerelement 3 weist eine zylindrische, als Bohrung ausgebildete Ausnehmung auf, in der die zylindrisch geformte zweite Oberfläche 6 der Lagerschale 4 aufgenommen ist. Auf diese Weise wird erreicht, dass das Lagerelement 3 fertigungstechnisch und messtechnisch mit geringem Aufwand hergestellt werden kann, ohne das auf besondere Formvorgaben und Formtoleranzen bei der Herstellung des Lagerelementes 3 geachtet werden muss. Bei den in den Fig. 1a und 1b dargestellten, nicht beanspruchten Ausführungsformen ist es lediglich erforderlich, in dem Lagerelement 3 eine zylindrische Ausnehmung, beispielsweise in Form einer zylindrischen Bohrung vorzusehen, um die zylindrische äußere zweite Oberfläche 6 der Lagerschale 4 aufzunehmen. Der fertigungstechnisch aufwändigere Schritt, eine an die konkav geformte Oberfläche 1 des Kurbelwellenzapfens 2 angepasste konvexe Oberfläche 5 herzustellen, wird bei der Erfindung von dem Lagerelement 3 weg und hin zur Lagerschale 4 verlagert. Das Herstellen der konvex geformten ersten Oberfläche 5 kann wesentlich einfacher, mit geringerem Aufwand und mit geringeren Kosten bei der Herstellung des vergleichsweise kleinen Lagerelements 4 realisiert werden. Das wesentlich größere und komplexere Bauteil, nämlich das Lagerelement 3, muss lediglich mit einer einfachen zylindrischen Ausnehmung versehen werden.

Auf diese Weise wird ermöglicht, dass an einem komplexen Bauteil des Kurbeltriebs, nämlich dem Lagerelement 3, lediglich eine zylindrische Ausnehmung vorgesehen werden muss, so dass dieses komplexe Bauteil einfach und kostengünstig herstellbar ist. Gleichzeitig werden die Vorteile beibehalten, die mit der Lagerung des Lagerelementes auf einer konkav geformten Oberfläche des Kurbelwellenzapfens einhergehen. Diese Vorteile sind in der Druckschrift WO 2008/129395 A2 ausführlich dargestellt.
Eine zweite, durch den unabhängigen Patentanspruch beanspruchte Ausführungsform der Erfindung ist in den Fig. 2a und 2b dargestellt. In Fig. 2a ist das Lagerelement 3 als Pleuelstange ausgebildet. Diese Pleuelstange ist unter Zwischenschaltung einer Lagerschale 4 mit ihrem großen Pleuelauge auf einem Kurbelwellenzapfen 2 einer im Übrigen nicht näher dargestellten Kurbelwelle gelagert. Beim Gegenstand gemäß Fig. 2b dagegen ist der Kurbelwellenzapfen 2 als Hauptlagerzapfen einer nicht näher dargestellten Kurbelwelle ausgebildet, wobei der Kurbelwellenzapfen 2 unter Zwischenschaltung einer Lagerschale 4 in einer Lageraufnahme drehbar aufgenommen ist. Diese Lageraufnahme ist mit einem nicht dargestellten Motorgehäuse fest verbunden und bildet das Lagerelement 3.

Sowohl bei der Ausführungsform nach Fig. 2a als auch bei der Ausführungsform nach Fig. 2b weist der Kurbelwellenzapfen 2 eine konkav geformte Oberfläche 1 auf. Die zwischen dem Lagerelement 3 und dem Kurbelwellenzapfen 2 angeordnete Lagerschale 4 weist eine erste konvex geformte Oberfläche 5 auf, die dem Kurbelwellenzapfen zugewandt ist. Die konvex geformte Oberfläche 5 ist hinsichtlich ihrer Form an die konkav geformte Oberfläche 1 des Kurbelwellenzapfens 2 angepasst.

Auf der von dem Kurbelwellenzapfen 2 abgewandten Seite weist die Lagerschale 4 eine zweite, konkav geformte Oberfläche 6 auf. Diese zweite, konkav geformte Oberfläche 6 weist eine wesentlich weniger starke Krümmung auf als die Krümmung der konkav geformten Oberfläche 1 des Kurbelwellenzapfens 2. Dementsprechend weist auch die der zweiten Oberfläche 6 der Lagerschale 4 zugewandte Oberfläche des Lagerelementes 3 eine deutlich geringere Krümmung auf als dies erforderlich wäre, wenn diese an die konkav geformte Oberfläche 1 des Kurbelwellenzapfens 2 angepasst werden müsste. Die Krümmung der zweiten, konkav geformten Oberfläche 6 der Lagerschale 4 bestimmt somit die Krümmung der konvex geformten, der Lagerschale 4 zugewandten Lagerfläche des Lagerelements 3. Aus diesem Grund kann die Formgebung dieser konvex geformten Lagerfläche des Lagerelements völlig unabhängig von der konkav geformten Lagerfläche des Kurbelwellenzapfens 2 gestaltet werden.

Dadurch, dass - ebenso wie bei der ersten, nicht beanspruchten Ausführungsform gemäß den Fig. 1a und 1b - auch bei der Ausführungsform nach den Fig. 2a und 2b der Querschnitt der Lagerschale 4 in Richtung der Längserstreckung des Kurbelwellenzapfens 2, also parallel zur Zeichnungsebene gesehen, nicht konstant verläuft, kann die der Lagerschale 4 zugewandte Oberfläche des Lagerelements 3 wesentlich weniger stark gekrümmt ausgebildet sein als dies erforderlich wäre, wenn die Lagerschale 4 in Richtung der Längserstreckung des Kurbelwellenzapfens 2 einen konstanten Querschnitt aufweisen würde. Denn dann müsste die Krümmung der dem Kurbelwellenzapfen 2 zugewandten Oberfläche des Lagerelements 3 hinsichtlich ihrer Krümmung an die konkav geformte Oberfläche 1 des Kurbelwellenzapfens 2 angepasst sein.

Bei der Ausführungsform nach den Fig. 2a und 2b kann von den Vorteilen der größeren Kontaktfläche zwischen dem Lagerelement 3 und der Lagerschale 4 profitiert werden, wobei gleichzeitig ein geringer Fertigungsaufwand für die Herstellung des Lagerelements 3 beibehalten wird, weil die deutlich geringere Krümmung der der Lagerschale 4 zugewandten Oberfläche des Lagerelements 3 deutlich weniger messtechnischen und fertigungstechnischen Aufwand erfordert als die Herstellung einer stärker gekrümmten konvexen Oberfläche unter Einhaltung der für den Anwendungsfall erforderlichen Form- und Maßtoleranzen.

Beiden vorstehend beschriebenen Ausführungsformen ist gemeinsam, dass ein sehr flexibler Kurbeltrieb zur Verfügung gestellt wird. Mit ein und derselben Kurbelwelle können beispielsweise unterschiedliche Pleuelstangen kombiniert werden, wobei lediglich unterschiedlich ausgestaltete Lagerschalen 4 zwischen dem Kurbelwellenzapfen und dem großen Pleuelauge der Pleuelstange angeordnet werden müssen. In ähnlicher Weise können unterschiedlich geformte Lagerböcke zur Aufnahme der Hauptlagerzapfen ein und derselben Kurbelwelle verwendet werden, wobei lediglich entsprechend angepasste Lagerschalen 4 zwischen dem Kurbelwellenhauptlagerzapfen und dem Lagerbock angeordnet werden müssen. Auf diese Weise können an dem konkreten Einsatzfall optimal angepasste Lagerelemente mit ein und derselben Kurbelwelle auf einfache Weise kombiniert werden. Auch ist es möglich, ein und dieselbe Kurbelwelle in unterschiedlichen Motorgehäusen mit unterschiedlich gestalteten Lagerböcken für die Aufnahme der Kurbelwelle einzusetzen.

Die vorstehend genannten Vorteile sind in der Praxis von großer Bedeutung. Die Lagerungsgeometrie, das heißt die Geometrien der miteinander in Wirkverbindung stehenden Lagerflächen, können bei der Erfindung hinsichtlich des Anwendungsfalls optimiert werden, beispielsweise im Hinblick auf dynamisches Verhalten der Lagerpartner, Schmierung der Lagerung, Prozessparameter während des Motorbetriebs usw. Dies kann z.B. im Hinblick auf die deutlich unterschiedlichen Druckniveaus ausgenutzt werden, bei denen Motoren betrieben werden. So treten beispielsweise bei Benzinmotoren und Dieselmotoren im Betrieb deutlich unterschiedliche Drücke auf. Die im Betrieb auftretenden Drücke sind bei Dieselmotoren deutlich größer als bei Benzinmotoren. Daher sind auch z.B. die Anforderungen an die Lagerung der Pleuelstangen auf dem Kurbelzapfen der Kurbelwelle bzw. an die Lagerung der Kurbelwellehauptzapfen im Motorgehäuse bei Dieselmotoren andere als bei Benzinmotoren, so dass die jeweiligen Lagerungen konstruktiv unterschiedlich gestaltet werden müssen, um die jeweils geforderte Lebensdauer des Kurbeltriebs zu erreichen. Die vorliegende Erfindung ermöglicht es nun, trotz dieser unterschiedlichen Anforderungen bei unterschiedlichen Motoren ein und dieselbe Kurbelwelle zu verwenden, denn die erforderlichen Unterschiede im Hinblick auf die Ausgestaltung der Lagerungen werden erfindungsgemäß durch die Verwendung einer an den Einsatzfall angepassten Lagerschale zusammen mit einer an die Lagerschale angepassten Pleuelstange realisiert.

Die erfindungsgemäße Lagerschalenlösung stellt dem Konstrukteur eine größere Flexibilität im Hinblick auf anwendungsfallbezogene Anpassungs- und Optimierungsprozesse zur Verfügung. Die Lagerflächenpaarung zwischen Lagerelement 3 und Lagerschale 4 kann auf einfache Weise unterschiedlich ausgestaltet werden, ohne dass die Auslegung und Gestaltung der Kurbelwelle selbst verändert werden müsste.

## Patentansprüche

1. Kurbeltrieb mit einem eine konkav geformte Oberfläche (1) aufweisenden Kurbelwellenzapfen (2) einer Kurbelwelle eines Verbrennungsmotors, einem Lagerelement (3), in welchem der Kurbelwellenzapfen (2) drehbar gelagert ist, und einer zwischen dem Kurbelwellenzapfen (2) und dem Lagerelement (3) angeordneten Lagerschale (4), die eine konvex geformte erste Oberfläche (5) aufweist, welche der konkav geformten Oberfläche (1) des Kurbelwellenzapfens (2) zugeordnet ist, wobei die Lagerschale (4) eine zweite, dem Lagerelement (3) zugeordnete Oberfläche (6) aufweist, die derart ausgebildet ist, dass die Lagerschale (4) in Längsrichtung des Kurbelwellenzapfens (2) gesehen einen nicht konstanten Querschnitt aufweist, und wobei die der Lagerschale (4) zugewandte Oberfläche des Lagerelements (3) hinsichtlich ihrer Form an die zweite Oberfläche (6) der Lagerschale (4) angepasst ist, **dadurch gekennzeichnet, dass** die zweite Oberfläche (6) der Lagerschale (4) konkav ist und dabei eine geringere Krümmung aufweist als die konkav geformte Oberfläche (1) des Kurbelwellenzapfens (2).

## Claims

1. Crank drive having a crankshaft journal (2) of a crankshaft of an internal combustion engine, which crankshaft journal (2) has a concavely shaped surface (1), a bearing element (3), in which the crankshaft journal (2) is mounted rotatably, and a bearing shell (4) which is arranged between the crankshaft journal (2) and the bearing element (3) and has a convexly shaped first surface (5) which is assigned to the concavely shaped surface (1) of the crankshaft journal (2), the bearing shell (4) having a second surface (6) which is assigned to the bearing element (3) and is configured in such a way that, as viewed in the longitudinal direction of the crankshaft journal (2), the bearing shell (4) has a non-constant cross section, and that the surface of the bearing element (3) which faces the bearing shell (4) being adapted with regard to its shape to the second surface (6) of the bearing shell (4), **characterized in that** the second surface (6) of the bearing shell (4) is concave and has a smaller curvature here than the concavely shaped surface (1) of the crankshaft journal (2).

## Revendications

1. Commande à manivelle comprenant un tourillon de vilebrequin (2) présentant une surface de forme concave (1) d'un vilebrequin d'un moteur à combustion interne, un élément de palier (3) dans lequel est supporté à rotation le tourillon de vilebrequin (2), et une coque de palier (4) disposée entre le tourillon de vilebrequin (2) et l'élément de palier (3), laquelle présente une première surface de forme convexe (5), qui est associée à la surface de forme concave (1) du tourillon de vilebrequin (2), la coque de palier (4) présentant une deuxième surface (6) associée à l'élément de palier (3), qui est réalisée de telle sorte que la coque de palier (4), vue dans la direction longitudinale du tourillon de vilebrequin (2), présente une section transversale non constante, et la surface de l'élément de palier (3) tournée vers la coque de palier (4), en termes de sa forme, étant adaptée à la deuxième surface (6) de la coque de palier (4), **caractérisée en ce que** la deuxième surface (6) de la coque de palier (4) est concave et présente en l'occurrence une plus faible courbure que la surface de forme concave (1) du tourillon de vilebrequin (2).
